# EUROPEAN PATENT APPLICATION

(11) **EP 1 879 118 A1**
(43) Date of publication of application: **16.01.2008**
(21) Application number: 06731059.9
(22) Date of filing: 04.04.2006
(51) Int. Cl.: G06F 17/30

(54) **SEARCH SERVER**

(30) Priority: 04.04.2005 JP 2005107678
(71) Applicant: NTT DoCoMo Inc., Chiyoda-Ku Tokyo 100-6150 (JP)
(72) Inventor: NAGANUMA, Takefumi c/o Intellectual Property Department, 11-1, Nagata-cho 2-chome Chiyoda-ku, Tokyo 1006150 (JP); KURAKAKE, Shoji co Intellectual Property Department, 11-1, Nagata-cho 2-chome Chiyoda-ku, Tokyo 1006150 (JP)
(74) Representative: Bockhorni, Josef
(86) International application number: PCT/JP2006/307111
(87) International publication number: WO 2006/107039

(57) **Abstract**

A search server 14 comprises a plurality of search target databases 24, 26 each storing search target information and task IDs to indicate classifications according to the search target information in correspondence to each other; a user action database 22 storing searching information and task IDs in correspondence to each other; a query receiver 20 for receiving a query containing a query character string from a mobile communication terminal 12; a user action determiner 23 for specifying a task ID associated with the query, with reference to the query character string and the information stored in the user action database 22; a facility selector 25 and a Web content selector 28 for acquiring the search target information corresponding to the specified task ID from the plurality of search target databases 24, 26; and a search result information generator 30 for generating search result information to the query from the acquired search target information.

## Description

### [Technical Field]

The present invention relates to a search server.

### [Background Art]

It is widespread practice to access information contents on the Internet by making use of mobile communication terminals such as cell phones. Among others, a search service dependent on location information is often used, e.g., a search for facility information by filtering information, using the current location information of a user. In this search service, the location information used is sensor information by GPS (Global Positioning System) or the like, information on base stations wirelessly accessed by a mobile communication terminal, or the like. The location of the user is specified by use of this location information, whereby the facility information as search targets is limited to a scope assumed to be useful to the user at the site, or the information on the Internet is optimized for that site, thereby improving the convenience of the user.

However, the search method as described above needed to individually execute the search for general information on the Internet and the search for facility information. For example, it was necessary to first search for the facility information about shops for merchandise purchase and thereafter search for information on the Internet about merchandise that the user intends to purchase at the facilities, by a keyword search or the like. For dealing with it, there is a proposed technology of specifying a location such as an address from the information contents on the Internet and associating the location information with the information contents (e.g., cf. Non-patent Documents 1 and 2 below).
[Non-patent Document 1] K. Takahashi, N. Miura, S. Yokoji and K. Shima, "Mobile Info Searching information Integration for Location-Aware Computing," Journal of Information Processing Society of Japan, vol. 41, No. 4, pp1192-1201, 2000
[Non-patent Document 2] Satoshi OYAMA, Kaoru HIRAMATSU, and Koichi YAMADA, "Digital City Kyoto-for construction of public information space for citizens," bit, vol. 33, No. 4, pp.8-12, 2001

### [Disclosure of the Invention]

### [Problem to be Solved by the Invention]

However, the technology described in Non-patent Documents 1 and 2 above used the information to specify the location such as the address, contained in the information contents, and was not applicable to the information contents without the information to specify the location. Particularly, it failed to present to the user, information contents not containing the location information but needed in use of specific facilities. When plural types of searches are needed as described above, individual execution of the searches forces the user to bear the burden, for example, with a portable terminal insufficient in operability and list view performance of the screen.

The present invention has been accomplished in order to solve the above problem and an object of the invention is to provide a search server capable of performing plural types of searches readily.

### [Means for Solving the Problem]

A search server according to the present invention comprises a plurality of search target databases each storing search target information and classification information indicating a classification according to the search target information in correspondence to each other; a classification information database storing searching information and the classification information in correspondence to each other; search request receiving means for receiving a search request containing searching information, from a terminal; classification information specifying means for specifying classification information associated with the search request, with reference to the information stored in the classification information database, based on the searching information contained in the search request received by the search request receiving means; information acquiring means for acquiring the search target information corresponding to the classification information specified by the classification information specifying means, from the search target databases; and search result information generating means for generating search result information to the search request, based on the search target information acquired by the information acquiring means. The searching information herein refers to information serving as a key for execution of a search.

The search server according to the present invention is configured to specify the classification information from the searching information contained in the search request and to search the plurality of search target databases, using this classification information. Since the classification information is independent of formats of search targets, plural types of searches can be performed using it. Namely, according to the present invention, each of searches does not have to be performed individually and plural types of searches can be performed readily.

Preferably, location information is further stored in correspondence to the search target information stored in at least one of the search target databases, the search request receiving means further receives location information from the terminal associated with the search request, and the information acquiring means acquires the search target information corresponding to the classification information specified by the classification specifying means and the location information acquired by the search request receiving means. This configuration permits the following operation: when the search target information is associated with a location, information can be narrowed down by the location information, thereby enabling more appropriate searching.

The search server is preferably configured as follows: it further comprises a location information database hierarchically storing the location information, and the information acquiring means acquires the search target information corresponding to the location information with reference to the location information database. This configuration facilitates storage of the location information in the search target databases.

Preferably, the classification associated with the classification information is achieved based on a user action request. This configuration permits searches to reflect a user's intention appropriately, whereby the searches can be performed more appropriately.

### [Effect of the Invention]

In the present invention, the classification information is specified from the searching information contained in the search request and this classification information is used to search the plurality of search target databases. Since the classification information is independent of the formats of the search targets, plural types of searches can be performed using it. Namely, the present invention eliminates the need for individually performing each of searches and enables plural types of searches to be performed readily.

### [BRIEF DESCRIPTION OF THE DRAWINGS]

Fig. 1 is a drawing showing a configuration of a search server according to an embodiment of the present invention.
Fig. 2 is a drawing showing a user action data management table in a user action database.
Fig. 3 is a drawing showing a facility data management table in a facility database.
Fig. 4 is a drawing showing a Web content address management table in a Web content database.
Fig. 5 is a drawing showing a location information data management table in a location information database.
Fig. 6 is a flowchart of processing in the search server.
Fig. 7 is a drawing showing an example of a search result by the search server.
Fig. 8 is a drawing showing an overall configuration of a problem-solving support system with a server group as another embodiment of the search server according to the present invention.
Fig. 9 is a drawing showing an overall configuration of a problem-solving support system in a case where a Web content file is registered by a PC.
Fig. 10 is a drawing showing a functional configuration of a problem-solving support server.
Fig. 11 is a drawing showing a data storage example in a user action database.
Fig. 12 is a drawing showing a data storage example in a concept definition database.
Fig. 13 is a drawing showing the first half of a data storage example in a Web content database.
Fig. 14 is a drawing showing the second half of the data storage example in the Web content database.
Fig. 15 is a flowchart for explaining a task model providing process executed by a problem-solving support server.
Fig. 16 is a drawing showing an example of a task model displayed on a portable terminal.
Fig. 17 is a drawing showing an example of a screen displayed on a portable terminal in order to set detailed information about a task model.
Fig. 18 is a flowchart for explaining a URI list presenting process executed by a problem-solving support server.

### [Description of Reference Symbols]

10 information search system; 12 mobile communication terminal; 14 search server; 20 query receiver; 21 location information receiver; 22 user action database; 22a user action data management table; 23 user action determiner; 24 facility database; 24a facility data management table; 25 facility selector; 26 Web content database; 26a Web content address management table; 27 location information database; 27a location information data management table; 28 Web content selector; 29 map database; 30 search result information generator.

### [Best Mode for Carrying out the Invention]

The preferred embodiments of the search server according to the present invention will be described below in detail with reference to the drawings. The, same elements will be denoted by the same reference symbols throughout the description of the drawings, without redundant description.

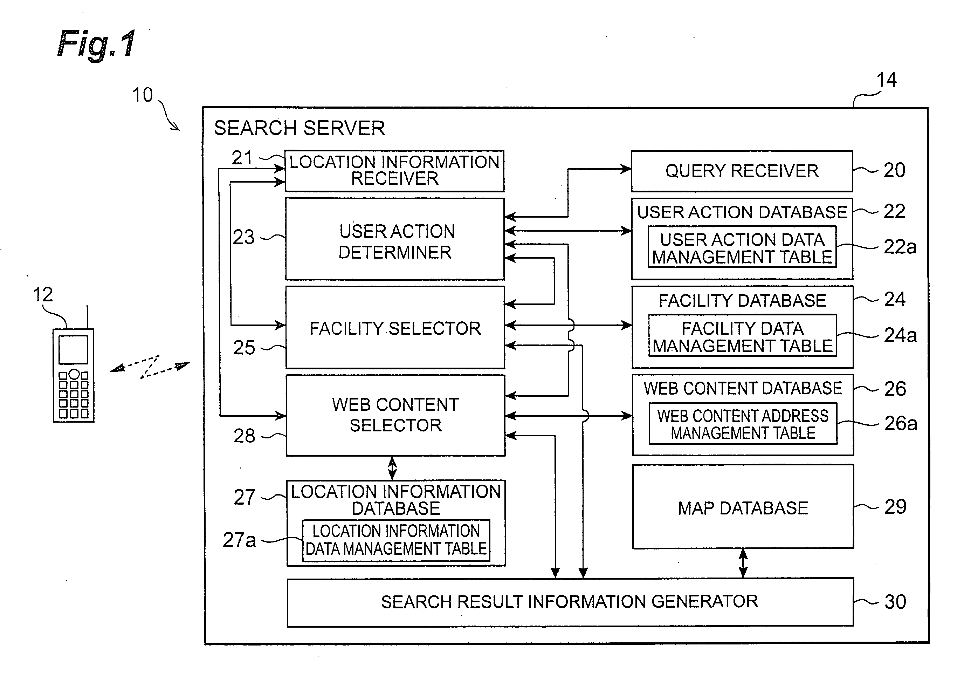

Fig. 1 shows a configuration of information search system 10 incorporating search server 14 according to an embodiment of the present invention. As shown in Fig. 1, the information search system 10 is a system that is configured with mobile communication terminal 12 and search server 14 and that is configured such that a search result is transmitted from the search server 14 in accordance with a search request from the mobile communication terminal 12. The mobile communication terminal 12 is a terminal manipulated by a user. The mobile communication terminal 12 can be connected to a mobile communications network such as a cell phone network and can be connected through the mobile communications network to the search server 14. A query being a search request is transmitted from the mobile communication terminal 12 to the search server 14. This query contains a query character string being searching information and the search server 14 performs an information search with reference to the query character string. The mobile communication terminal 12 is able to acquire location information of the terminal 12 itself by GPS (Global Positioning System) or the like and transmits the acquired location information along with the aforementioned query to the search server 14. The acquired and transmitted location information is equivalent, for example, to coordinate information indicating a latitude and longitude of mobile communication terminal 12.

The mobile communication terminal 12 is composed, specifically, of hardware such as a CPU (Central Processing Unit), memories, and a communication module. Specifically, a cell phone or the like corresponds thereto. Another example of the mobile communication terminal 12 is a PDA (Personal Digital Assistance) or the like, and a further possible example can be a terminal that is not always portable, e.g., a PC (Personal Computer). The communication network to which the mobile communication terminal 12 is connected can also be any network other than the mobile communications network, and may be a wired network such as the Internet. Although there is only one mobile communication terminal 12 depicted in Fig. 1, the information search system 10 normally incorporates a plurality of mobile communication terminals 12.

The search server 14 has a plurality of search target databases, receives a search request for searching of the search target databases from mobile communication terminal 12, and generates and transmits a search result according to the search request to the mobile communication terminal 12. The search server 14 is implemented by a server device composed, specifically, of hardware such as a CPU, memories, a storage, and a communication module. The search server 14 is installed in the mobile communications network or the like to which the mobile communication terminal 12 can be connected, so as to allow a connection from the mobile communication terminal 12.

The search server 14, as shown in Fig. 1, is configured with query receiver 20, location information receiver 21, user action database 22, user action determiner 23, facility database 24, facility selector 25, Web content database 26, location information database 27, Web content selector 28, map database 29, and search result information generator 30. Each of the elements of the search server 14 will be described below.

The query receiver 20 is a search request receiving means for receiving a query (search request) containing a query character string (searching information), which was transmitted from the mobile communication terminal 12. The received query is transmitted to the user action determiner 23.

The location information receiver 21 functions as a search request receiving means for receiving the location information of the terminal 12, which was transmitted along with the query from the mobile communication terminal 12. The acquired location information is transmitted to the facility selector 25 and to the Web content selector 28, for use in searching.

The user action database 22 is a classification information database preliminarily storing searching information and classification information in correspondence to each other. In the search server 14, the search target information is preliminarily classified according to the information. The classification information is information indicating this classification result. The searching information in the user action database 22 is not information received from the mobile communication terminal 12, but is preliminarily prepared on the search server 14 side. The foregoing classification is performed based on user action requests (tasks) as in a specific example below.

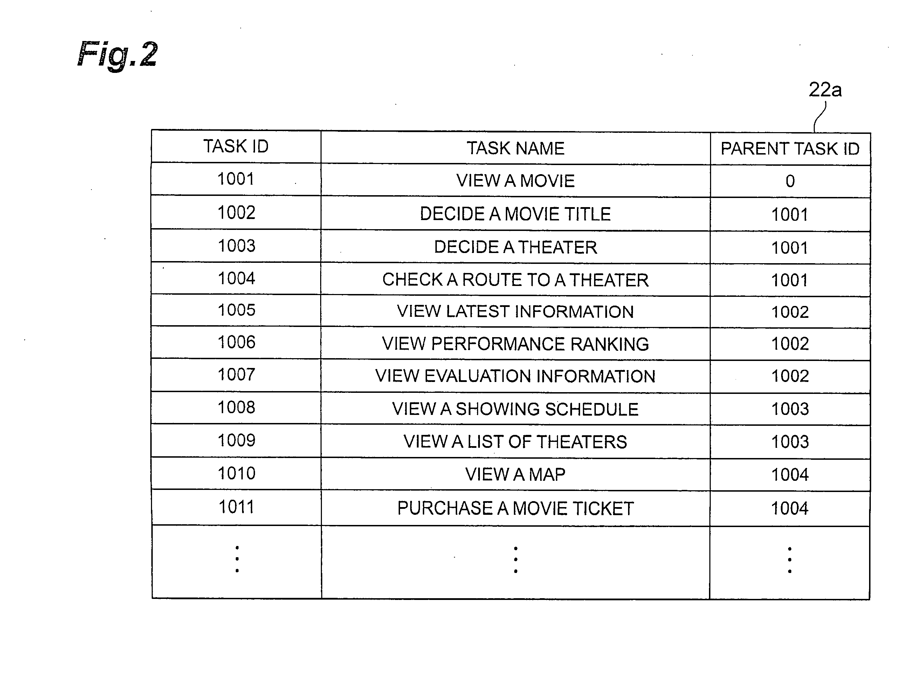

The user action database 22 holds the information, specifically for example, in such a manner that each piece of data is stored in user action data management table 22a as shown in Fig. 2. In the user action data management table 22a, as shown in Fig. 2, "task ID," "task name," and "parent task ID" are stored in correspondence to each other for each piece of data. The "task ID" is information to identify each piece of data in the user action data management table 22a and corresponds to the classification information. The "task name" is a name to indicate a content of each classification by a character string, and corresponds to the aforementioned searching information. The "parent task ID" is information to indicate a hierarchical relation of each piece of data in correspondence to a "task ID" of superordinate data to the data of interest. For example, as shown in Fig. 2, the data with the task ID of "1002" and the task name of "decide a movie title" is data subordinate to the data with the task ID of "1001" and the task name of "see a movie." As pieces of the searching information and the classification information are hierarchically held in this manner, it is feasible to correctly determine a user action request and to provide an output of a better search result meeting a user's request. The classification of searching information may be one except for that based on the user action requests as described above.

The user action determiner 23 is a classification information specifying means for specifying a task ID associated with a query, with reference to the query character string contained in the query received by the query receiver 20 and the information stored in the user action database 22. Specifically, it specifies the task ID by performing matching between the query character string and the "task names" in the user action data management table 22a. When there is a task name matching the query character string, the task ID corresponding to the task name is transmitted to the facility selector 25 and to the Web content selector 28, for use in searching. When there are pieces of data subordinate to the matching task name in the user action data management table 22a, the task IDs corresponding to those pieces of subordinate data are also transmitted to the facility selector 25 and to the Web content selector 28.

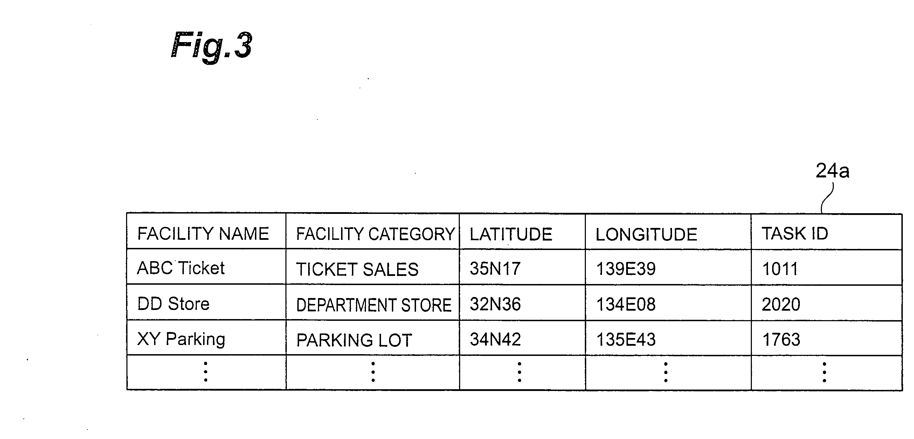

The facility database 24 is one of the search target databases holding the search target information in the search server 14. The facility database 24 preliminarily stores the search target information and task IDs in correspondence to each other. The search target information in the facility database 24 is information about facilities, where and what kinds of facilities are located. The facility database 24 holds the information, specifically for example, in such a manner that each piece of facility data is stored in facility data management table 24a as shown in Fig. 3. In the facility data management table 24a, as shown in Fig. 3, "facility name," "facility category," "latitude," "longitude," and "task ID" are stored in correspondence to each other for each piece of data.

The "facility name" is a character string and indicates a name of each facility. The "facility category" is a character string and indicates a category of each facility. The "latitude" and "longitude" indicate a latitude and longitude where each facility is located. The "task ID" is classification information associated in correspondence with each facility data, and is information used on the occasion of acquisition (searching) of data by the facility selector 25. Namely, the "task ID" in the facility database 24 indicates that a facility of interest relates to an action request associated with the "task ID" defined in the user action database 22. In the facility data management table 24a, for example, the first-row data indicates that the facility with the facility name of "ABC Ticket" in the facility category of "ticket sales" is located at "latitude 35°17' north" and "longitude 139°39' east" and is associated with the task ID " 1011."

The facility selector 25 is an information acquiring means for acquiring the search target information corresponding to the task ID specified by the user action determiner 23, from the facility database 24. The acquisition of the search target information is carried out also based on the location information of the mobile communication terminal 12 received by the location information receiver 21. Specifically, the facility selector 25 acquires data having the specified task ID and falling "within the effective range" of the mobile communication terminal 12, from the facility data stored in the facility database 24. The term "within the effective range" herein indicates that data is consistent with a rule, e.g., a facility is located within 5 km from the location of the mobile communication terminal 12 received by the location information receiver 21. This rule is preliminarily set in the facility selector 25. The distance between the mobile communication terminal 12 and the facility herein is calculated from the location information of the mobile communication terminal 12 and the location information of the facility stored in the facility database 24. The facility data acquired may be plural pieces of data. The search target information acquired is transmitted to the search result information generator 30.

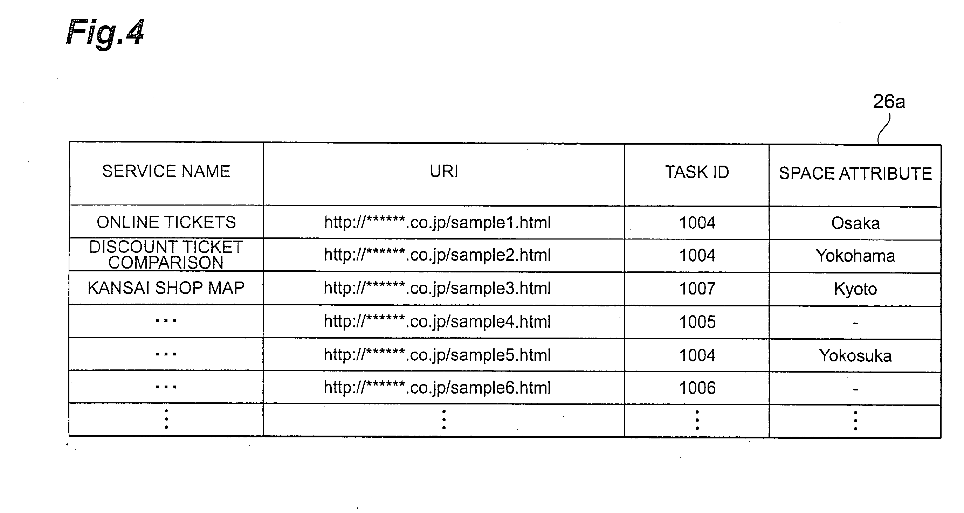

The Web content database 26 is one of the search target databases storing the search target information in the search server 14. The Web content database 26 preliminarily holds the search target information and task IDs in correspondence to each other. The search target information in the Web content database 26 is information about Web contents, e.g., access addresses of the Web contents. The Web content database 26 holds the information, specifically for example, in such a manner that each piece of Web content data is stored in Web content address management table 26a as shown in Fig. 4. In the Web content address management table 26a, as shown in Fig. 4, "service name," "URI (Uniform Resource Identifier)," "task ID," and "space attribute" are stored in correspondence to each other for each piece of data.

The "service name" is a character string and indicates what kind of information each Web content holds (what kind of information service is provided). The "URI" is a character string and indicates address information for access to each Web content. The "task ID" is classification information associated with each Web content and information used in acquisition (searching) of data by the Web content selector 28. Namely, the "task ID" in the Web content database 26 indicates that a Web content of interest provides information about an action request associated with the "task ID" defined in the user action database 22. The "space attribute" is a character string indicating a location, and indicates a positional target range of a user using a Web content of interest (one of location information). The "space attribute" does not always have to be held by all pieces of data in the Web content address management table 26a, and is held by only pieces of data for which the "space attribute" can be defined. The "space attribute" is used for acquisition of the search target information, along with the information held in the location information database 27 described below, by the Web content selector 28. In the Web content address management table 26a, for example, the first-row data indicates that the Web content with the service name of "online tickets" and the URI of ''http://*****.co.jp/sample1.html'' is associated in correspondence with the task ID of "1004" and the space attribute of "Osaka."

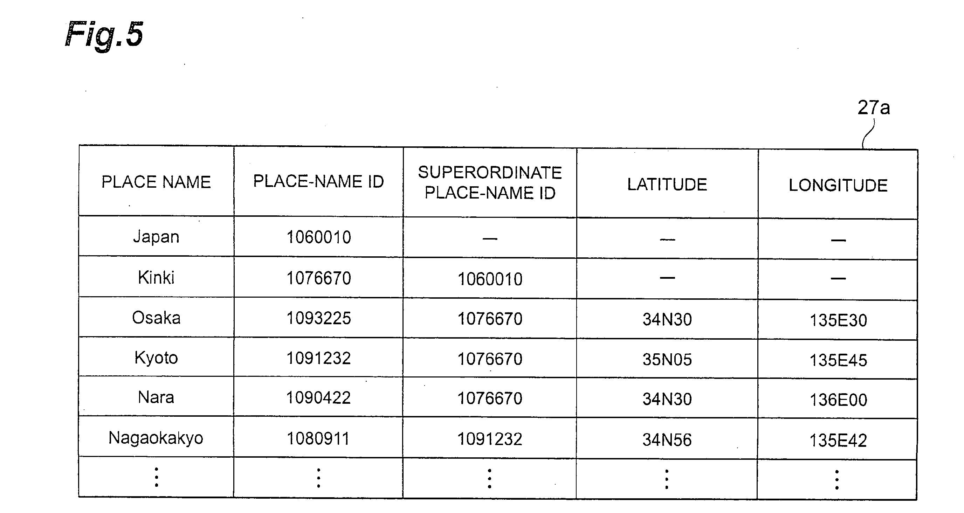

The location information database 27 is a database (geographic thesaurus) holding the location information for the Web content selector 28 to interpret the "space attribute" in the Web content database 26. The location information database 27 hierarchically holds the location information. The location information database 27 holds the information, specifically for example, in such a manner that each piece of data is stored in location information data management table 27a as shown in Fig. 5. In the location information data management table 27a, as shown in Fig. 4, "place name," "place-name ID," "superordinate place-name ID," "latitude," and "longitude" are stored in correspondence to each other for each piece of data.

The "place name" is a character string and corresponds to the "space attribute" in the Web content database 26. The "place-name ID" is an ID to uniquely identify each piece of data in the location information data management table 27a. The "superordinate place-name ID" is a "place-name ID" of data in an upper class above each piece of data of interest. If a piece of data has no superordinate data, the "superordinate place-name ID" is null. The "latitude" and "longitude" indicate a latitude and longitude of a location of each piece of data. If a piece of data has subordinate data, there are cases where the "latitude" and "longitude" are not held for the piece of data, as represented by the "latitude" and "longitude" of the subordinate data. For example, the data with the place name of "Osaka" indicates that the location thereof is "latitude 34°30' north" and "longitude 135°30' east" and that its superordinate data is "Kinki." It is also indicated that the data superordinate to the data of "Kinki" is "Japan."

The Web content selector 28 is an information acquiring means for acquiring the search target information corresponding to the task ID specified by the user action determiner 23, from the Web content database 26. The acquisition of the search target information is achieved with reference to the location information database 27, also based on the location information of the mobile communication terminal 12 received by the location information receiver 21. Specifically, data with the specified task ID is acquired from the Web content data stored in the Web content database 26. Concerning the Web content data with the "space attribute" in the Web content database 26, it is acquired only if the location information of the mobile communication terminal 12 received by the location information receiver 21 is included in the "space attribute" of the Web content data (concerning the Web content data without the "space attribute," it is acquired if it has the specified task ID). Whether the location information of the mobile communication terminal 12 is included in the "space attribute" is determined with reference to the data in the location information database 27. For example, the location information of the mobile communication terminal 12 is determined to be included in the "space attribute" when the location specified by the location information of the mobile communication terminal 12 is within a given distance (e.g., within 5 km) from the location specified from the "latitude" and "longitude" of the data of interest or subordinate data thereof in the location information database 27 corresponding to the "space attribute." The acquired Web content data may be plural pieces of data. The acquired search target information is transmitted to the search result information generator 30.
The map database 29 is a database storing map data for generating information of the search result to the search request from mobile communication terminal 12. The map data is comprised, for example, of data of map images and data indicating to which location each point in the images corresponds.

The search result information generator 30 is a search result information generating means for generating information of the search result to the query from the mobile communication terminal 12, based on the search target information acquired by the facility selector 25 and the Web content selector 28. The search result is comprised, for example, of data in the HTML (Hyper Text Markup Language) format. It will be described later in more detail. The information of the search result thus generated is transmitted to the mobile communication terminal 12.

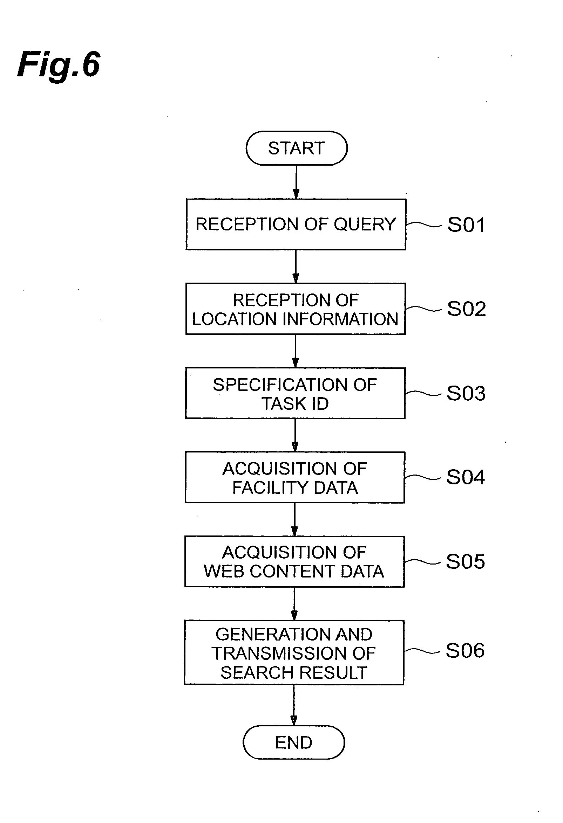

Subsequently, the processing executed in the search server 14 according to the present embodiment will be described using the flowchart of Fig. 6. The present processing is a procedure in which a query is transmitted from mobile communication terminal 12 to search server 14 and the search server 14 performs searching corresponding to the query.

First, the query receiver 20 receives a query transmitted from mobile communication terminal 12 to search server 14 through the mobile communications network (S01). As described above, the query contains a query character string being searching information. The transmission of the query from mobile communication terminal 12 is implemented, for example, in the same manner as in the case where a search engine is usually used on the Internet. Specifically, for example, the mobile communication terminal 12 accesses the search server 14 and the user enters the query character string in a form displayed on the mobile communication terminal 12 and pushes a button, thereby implementing the transmission of the query. The acquired query is transmitted to the user action determiner 23.

On the other hand, the location information receiver 21 receives the location information of the terminal 12 transmitted from the mobile communication terminal 12 to the search server 14 (S02). The transmission of the location information from mobile communication terminal 12 is implemented, for example, in such a manner that the mobile communication terminal 12 itself acquires the location information by GPS or the like at the same timing as the foregoing transmission of the query. Besides it, the location information may be one entered by the user as the query character string was. The acquired location information is transmitted to the facility selector 25 and to the Web content selector 28.

Subsequently, the user action determiner 23 specifies the task ID associated with the query, based on the acquired query (S03). The specification of the task ID is implemented by matching between the query character string in the query and the task names in the user action data management table 22a, as described above. The specified task ID is transmitted to the facility selector 25 and the Web content selector 28 to acquire the search target information. If there are any subordinate pieces of data to the matching task name in the user action data management table 22a, task IDs corresponding to those pieces of subordinate data are also transmitted to the facility selector 25 and the Web content selector 28. When there is no task ID specified (or when there is no task name coincident with the query character string), the search processing is terminated at that point. The search server 14 notifies the mobile communication terminal 12 that there is no search target information according to the query.

Subsequently, based on the specified task ID and the received location information of the mobile communication terminal 12, the facility selector 25 acquires facility data being the search target information associated with the query, from the facility database 24 (S04). The facility data acquired is data having the specified task ID and falling "within the effective range" of the mobile communication terminal 12, in the facility data management table 24a, as described above. The acquired facility data is transmitted to the search result information generator 30.

On the other hand, based on the specified task ID and the received location information of the mobile communication terminal 12, the Web content selector 28 acquires Web content data being the search target information associated with the query, from the Web content database 26 (S05). The acquired Web content data is data that has the specified task ID and the "space attribute" including the location information of the mobile communication terminal 12 in the Web content address management table 26a, as described above. The acquired Web content data is transmitted to the search result information generator 30. When there is no search target information acquired in either of the processes of S04 and S05 (or when there is no search target information meeting the conditions), the search processing is terminated and the search server 14 notifies the mobile communication terminal 12 that there is no search target information according to the query. Concerning the processes of S04 and S05, the process of S05 may be carried out first, or the both may be carried out in parallel.

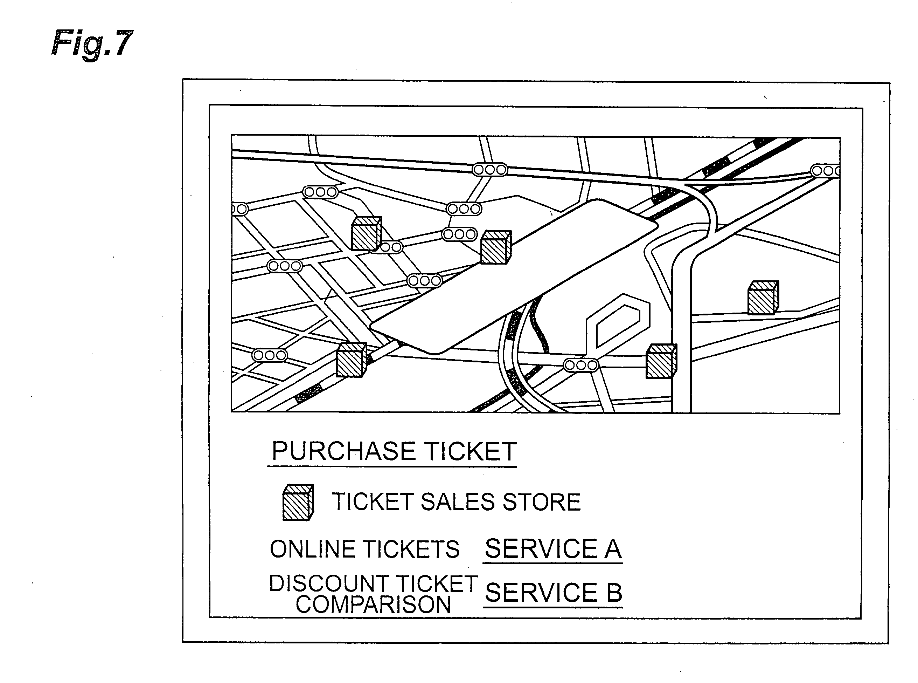

Next, the search result information generator 30 generates information of the search result to the query from the mobile communication terminal 12, based on the search target information acquired by the facility selector 25 and the Web content selector 28 (S06). The search result information generated is formed, for example, in the HTML format, as described above, and is as shown in Fig. 7. As shown in Fig. 7, the information acquired by the facility selector 25 is of an image form in which facility data is displayed as icons on a map with reference to the map data in the map database 29. The information acquired by the Web content selector 28 is of a list form of service names and URIs using the anchor tag of HTML. The generated search result information is transmitted to the mobile communication terminal 12. In the mobile communication terminal 12, the search result information is displayed on a display unit or the like provided in the mobile communication terminal 12, so as to allow the user to browse it.

As described above, the search server 14 of the present embodiment is configured to specify the task ID (classification information) from the query character string (searching information) included in the query (search request) and to search the plurality of search target databases (facility database 24 and Web content database 26) using this task ID. Since the task ID is independent of the formats of search targets, plural types of searches can be integrally carried out with one query. Namely, the present embodiment eliminates the need for individually carrying out each of the searches and enables plural types of searches to be readily carried out.

The mobile communication terminal 12 as in the present embodiment can be used anywhere regardless of locations, but is inferior in operability and screen browsability to personal computers and others in order to place priority on portability. Therefore, when the searches are readily carried out as in the present embodiment, the operability and convenience are improved.

When the search server is configured, as in the present embodiment, in the configuration wherein the location information is associated with the search target information in the search target databases 24, 26 and wherein the location information received from the mobile communication terminal 12 is used for acquisition of the searching information in the facility selector 25 and the Web content selector 28, it becomes feasible to narrow down the information by the location and to perform better searches.

When the location information is hierarchically stored as in the location information database 27 of the present embodiment, it can be easier to store the location information in the search target databases. More specifically, the location information can be expressed by text information of country names, prefecture names, municipality names, etc. in mutually hierarchical relationship. When the text information can be used in this manner, the storage, designation, etc. of the location information can be easier than in the case of the coordinate information such as latitudes and longitudes.

When the classification of search targets is based on actions for users to desire, i.e., based on action requests, as in the present embodiment, the searches can be performed even if a user has no idea about the number and types of search target information before the searches, as far as the user can enter a query character string as an action request. Namely, the searches appropriately reflect the user's intention and better searches can be performed.

In the present embodiment, the mobile communication terminal 12 first transmits the query and location information and thereafter the search server transmits the information from the facility database 24 and the information from the Web content database 26 together to the mobile communication terminal 12. Besides this embodiment, it is also possible to adopt, for example, a configuration wherein only the information from the Web content database 26 is once transmitted to the mobile communication terminal 12, additional information is received from the mobile communication terminal 12 with reference to the foregoing information, information is then acquired from the facility database 24 on the basis of the specified task ID and the additional information, and the acquired information is transmitted to the mobile communication terminal 12. The additional information is, for example, the location information included in the information from the Web content database 26 transmitted previously, or the like. When the two-stage searches are carried out in this manner, the searches can be performed with higher accuracy. This configuration is also adaptable for a case where the user desires to perform a search different from an original intention at the beginning, during the search, and is able to perform a plurality of searches readily and appropriately.

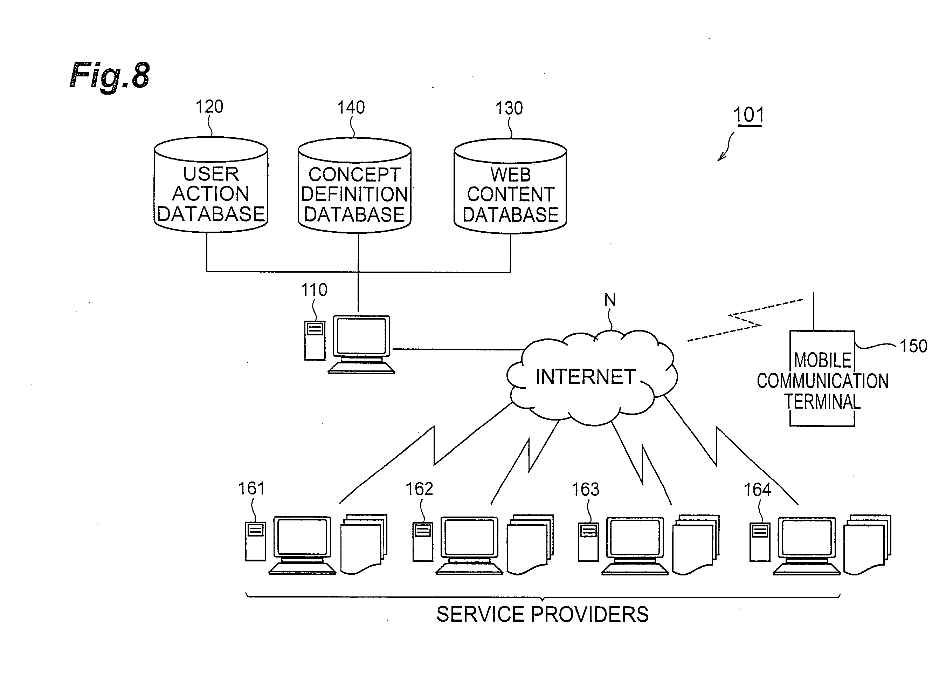

Subsequently, a problem-solving support system with a server group being another embodiment of the search server according to the present invention will be described with reference to the accompanying drawings. Fig. 8 is a drawing showing an overall configuration of the problem-solving support system. As shown in Fig. 8, the problem-solving support system 101 has problem-solving support server 110, user action database 120, Web content database 130, and concept definition database 140. The group of these servers 110, 120, 130, 140 corresponds to the search server 14 of the preceding embodiment. The problem-solving support system 101 is connected via Internet N to mobile communication terminal 150 and to service provider terminals 161, 162, 163, 164.

The problem-solving support server 110 is a server device that manages the user action database 120, Web content database 130, and concept definition database 140 (concept definition memory means) being three types of databases storing different information. The problem-solving support server 110 has an interface for receiving a task request transmitted from mobile communication terminal 150 and a Web content registration request transmitted via Internet N.

The user action database 120 in the present embodiment is a database storing a task model in which tasks as problem-solving targets and solutions thereto are hierarchically structured (the task model is composed of a plurality of tasks and formed by systematically arranging user action requests). The tasks forming the task model consist at least of abstract superordinate tasks and sub-tasks obtained by dividing the superordinate tasks. The sub-tasks can also be further divided into subordinate sub-tasks.

The Web content database 130 is a database storing URIs (Uniform Resource Identifiers) of services associated with user actions, and attribute information. This Web content database 130 is also called an SD (Service description) storage database.

The concept definition database 140 is a database storing information to indicate background concepts associated with the user actions.

Specific configurations of the respective databases will be described later.

The mobile communication terminal 150 is a terminal with a wireless data communication function. The mobile communication terminal 150 is equivalent, for example, to a cell phone, PHS (Personal Handyphone System), PDA (Personal Digital Assistance) with a wireless communication card, or the like.

The service provider terminals 161-164 are server devices managed by companies or individuals providing services of forms available for the mobile communication terminal 150. Their connection form is arbitrary, e.g., a direct connection form to the Internet, or a connection form through a telecommunications carrier network.

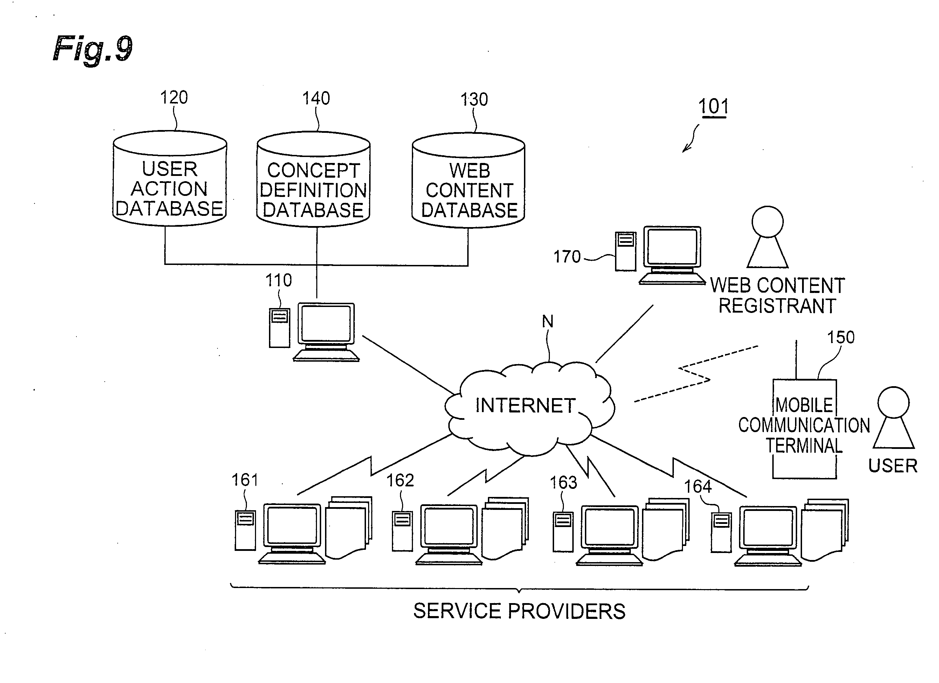

Fig. 9 is a mode of the system in a case where the entity to register Web content files in the Web content database 130 is a user of PC (Personal Computer) 170. Fig. 9 shows the example in which the user of the problem-solving support system 101 and the registrant of the Web content files are different users, but they may be the same person. The configuration of the problem-solving support server 110 being the main component of the problem-solving support system according to the present invention will be detailed below on the assumption of the system mode shown in Fig. 9.

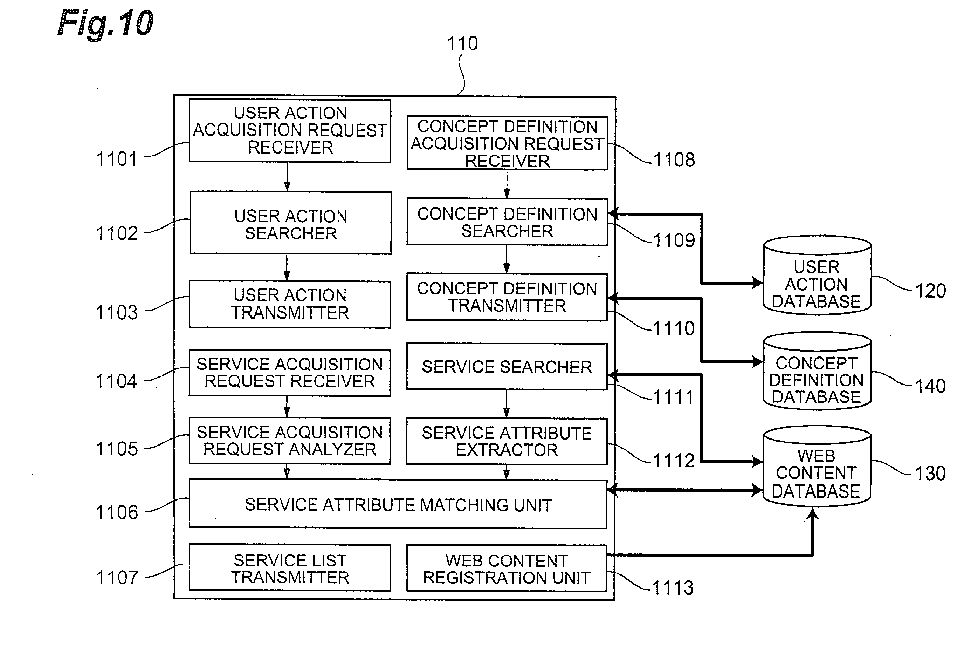

Fig. 10 is a drawing showing a functional configuration of problem-solving support server 110. As shown in Fig. 10, the problem-solving support server 110 has user action acquisition request receiver 1101, user action searcher 1102, user action transmitter 1103 (transmitting means), service acquisition request receiver 1104, service acquisition request analyzer 1105 (analyzing means), service attribute matching unit 1106 (selecting means), service list transmitter 1107 (presenting means), concept definition acquisition request receiver 1108, concept definition searcher 1109, concept definition transmitter 1110, service searcher 1111, service attribute extractor 1112 (extracting means), and Web content registration unit 1113 (registering means).

The user action acquisition request receiver 1101 receives a user action acquisition request transmitted from mobile communication terminal 150 or PC 170.

The user action searcher 1102 searches the user action database 120 for a task model including a designated character string in accordance with the user action acquisition request, and acquires it.

The user action transmitter 1103 transmits the task model acquired by the user action searcher 1102, in a form which the mobile communication terminal 150 or PC 170 as a requester can display.

The service acquisition request receiver 1104 receives a service acquisition request transmitted from mobile communication terminal 150.

The service acquisition request analyzer 1105 analyzes the service acquisition request and extracts an ID of a task and attribute information of a designated service from the request.

The service attribute matching unit 1106 compares or collates the attribute information of the service extracted by the service acquisition request analyzer 1105, with the attribute information of services stored in the Web content database 130 and extracts only the attribute information of matching services. This enables selection of services to be provided for the user.

The service list transmitter 1107 transmits the services executable at the terminal, in a list-displayable form, to the mobile communication terminal 150 as a service acquisition requester.

The concept definition acquisition request receiver 1108 receives a concept definition acquisition request transmitted from mobile communication terminal 150 or PC 170.

The concept definition searcher 1109 searches the concept definition database 140 for concept definitions associated with a user action including a designated character string, in accordance with the concept definition acquisition request, and acquires the concept definitions.

The concept definition transmitter 1110 transmits the concept definitions acquired by the concept definition searcher 1109, in a displayable form at the mobile communication terminal 150 or PC 170 as a requester.

The service searcher 1111 searches the Web content database 130 for service attribute information (entries) corresponding to a designated user action, and acquires the information.

The service attribute extractor 1112 separates and extracts time information and space information of a service and attribute information inherent to a task, from the service attribute information acquired by the service searcher 1111.

The Web content registration unit 1113 receives a Web content file transmitted from PC 170 and stores it in the Web content database 130.

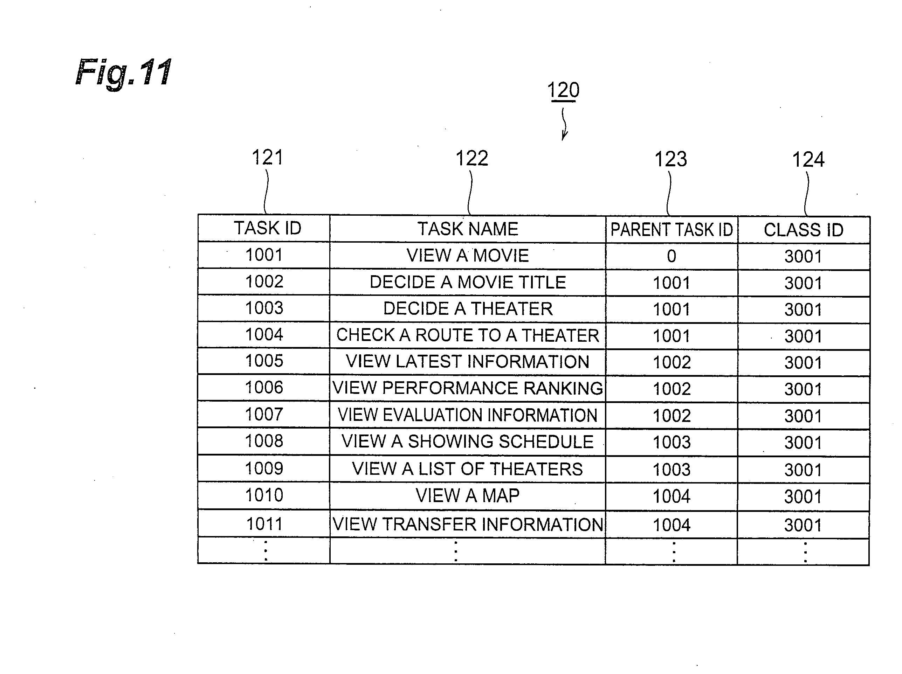

Subsequently, a configuration of the user action database 120 will be described. Fig. 11 is a drawing showing a data storage example in the user action database 120. The user action database 120 is a database storing data preliminarily defined by an administrator of the problem-solving support server 110. As shown in Fig. 11, the user action database 120 has task ID region 121, task name region 122, parent task ID region 123, and class ID region 124.

In the task ID region 121, IDs given for unique identification of tasks (e.g., "1001," "1002,"..., "1011,"...) are stored as task IDs. In the task name region 122, character strings preliminarily prepared on the assumption of tasks to be requested by users (e.g., "view a movie," "decide a movie title,"..., "view transfer information,"...) are stored as task names.

In the parent task ID region 123, IDs of other tasks located above corresponding tasks (e.g., "0," "1001," "1001,"..., "1004,"...) are stored as parent task IDs. When "0" is stored in the parent task ID like the task with ID "1001," it is meant that there is no superordinate task. In the class ID region 124, class IDs in the concept definition database 140 as targets of corresponding tasks (e.g., "3001," "3002,"..., "3001,"...) are stored. This associates each requested task with a concept definition. Each task except for a root task (a task without a parent task) is given the same ID as a class ID as a target of a task being a parent thereof.

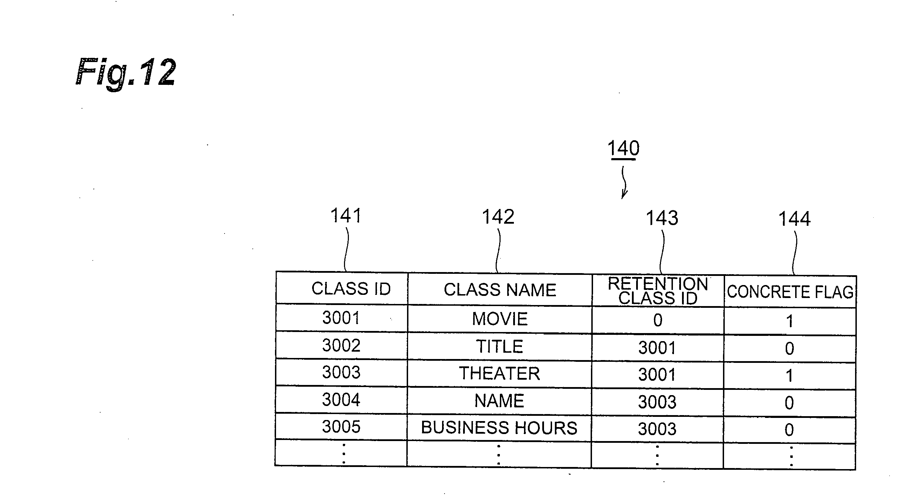

Next, a configuration of the concept definition database 140 will be described. Fig. 12 is a drawing showing a data storage example in the concept definition database 140. The concept definition database 140 is a database storing data preliminarily defined by the administrator of the problem-solving support server 110. As shown in Fig. 12, the concept definition database 140 has class ID region 141, class name region 142, retention class ID region 143, and concrete flag region 144.

In the class ID region 141, IDs given for unique identification of classes (e.g., "3001," "3002,"..., "3005,"...) are stored as class IDs. In the class name region 142, character strings preliminarily prepared for specifying contents of defined concepts (e.g., "movie," "title,"..., "business hours,"...) are stored as class names.

In the retention class ID region 143, IDs of other classes as entities to retain corresponding classes (e.g., "0," "3001,"..., "3003,"...) are stored as retention class IDs. This enables reference to retention relations between classes existing in the concept definition database 140. When "0" is stored in the retention class ID like the class with ID "3001," it is meant that this class is not retained in any class. In the concrete flag region 144, concrete flags are stored which indicate whether a corresponding class can retain a value. When a value can be retained, "1" is set as a concrete flag; when no value can be retained, "0" is set as a concrete flag.

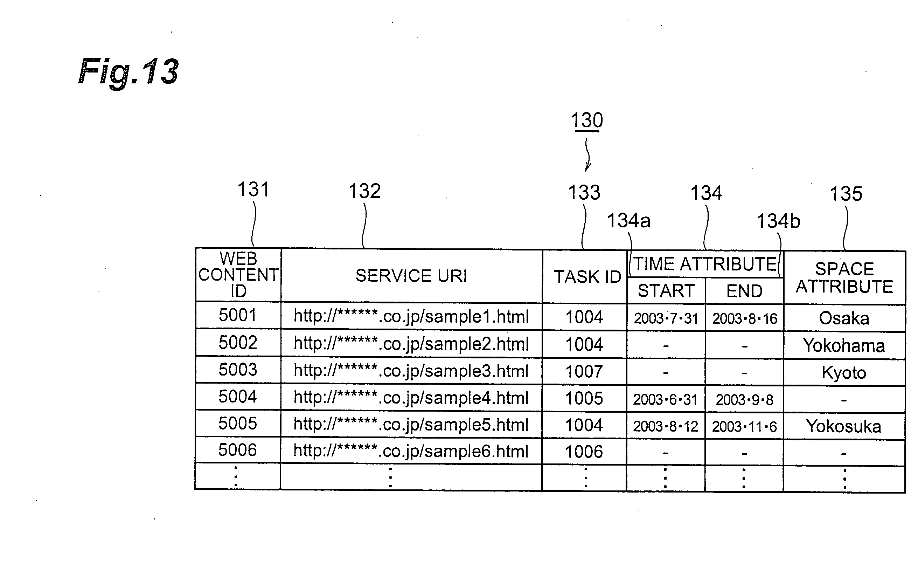

Next, a configuration of the Web content database 130 will be described. Fig. 13 is a drawing showing a data storage example inside the Web content database 130. The Web content database 130 is a database in which data is successively added and updated through the network. As shown in Fig. 13, the Web content database 130 has Web content ID region 131, service URI region 132, task ID region 133, time information region 134, and space information region 135.

In the Web content ID region 131, IDs given for unique identification of Web contents (e.g., "5001," "5002,"..., "5006,"...) are stored as Web content IDs (also called SD-IDs (Service Description-IDentifications)). In the service URI region 132, service URIs (Uniform Resource Identifiers) are stored as identification information for identifying services registered in the present system, on the network (e.g., http://******.co.jp/sample1.html,..., http://******.co.jp/sample6.html,...).

In the task ID region 133, identifiers of tasks in the user action database 120, associated with corresponding services (e.g., "1004," "1004,"..., "1006,"...) are stored as task IDs. The time information region 134 internally has start date region 134a and end date region 134b and in the start date region 134a, start dates of corresponding services (e.g., 2003-7-31,..., 2003-8-12,...) are recorded as updatable as a kind of attribute information. In the end date region 134b, end dates of corresponding services (e.g., 2003-8-16,..., 2003-11-6,...) are recorded as updatable as a kind of attribute information. This enables reference to how long each service is valid, for a task associated therewith.

In the space information region 135, character strings indicating spaces (places) where corresponding services are provided (e.g., "Osaka," "Yokohama,"..., "Yokosuka,"...) are recorded as updatable. This enables reference to how wide a geographic range of a service is as a valid region, for a task associated therewith.

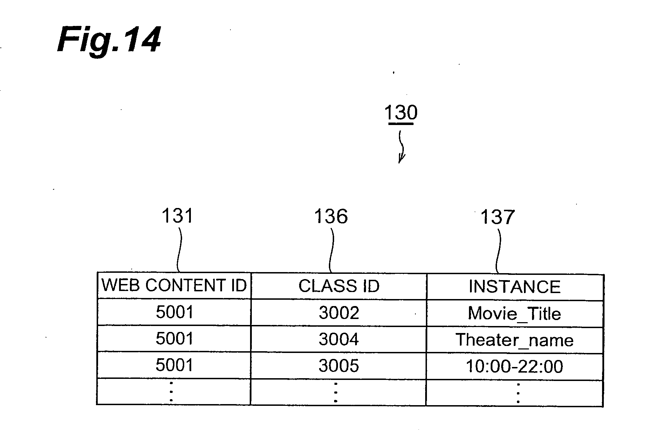

The Web content database 130, as shown in Fig. 14, further has class ID region 136 and instance region 137 associated in correspondence to the Web content ID 131. In the class ID region 136, information to indicate that each corresponding service is limited by information about any one of classes in the concept definition database 140 (e.g., "3002," "3004," "3005,"...) is stored as class IDs. In the instance region 137, specific values to indicate class names in the concept definition database 140, specified by corresponding class IDs, are stored as instances.

The operation of the problem-solving support system 101 will be described below. The problem-solving support system 101 executes the following principal processes: a registering process of Web content file in the problem-solving support server 110 and a problem-solving support process for the user of mobile communication terminal 150.

### (Registering Process of Web Content File)

First, let us describe the registering process of Web content file executed as the first phase. As a premise, a Web content file is prepared by describing an association between a task stored in the user action database 120 and one service existing on the network. The description of Web content file is initiated by acquiring a user action retained by the problem-solving support server 110. A Web content file is described by an administrator of the service provider terminal 161-164 or a third party (a registrant of the Web content file) and thereafter it is transmitted to the problem-solving support server 110.

Specifically, the registrant of the Web content file establishes a connection through PC 170 or the like to the problem-solving support server 110 and issues a request for acquisition of a user action. The user action as a target of the acquisition request is designated in a natural language, or by a method of selecting one from a list of user actions preliminarily prepared by the problem-solving support server 110. The user action matching the acquisition request is acquired from the user action database 120 and is transmitted to the requester. Each of tasks constituting the task model (user action) has a task ID assigned in the user action database 120. The registrant of the Web content file describes a set of a URI of a service and task IDs to be associated with the service, in the Web content file.

The description content of the Web content file does not have to be limited only to the combination of the URI and the task ID, but may also be given an attribute to indicate an effective range of information provided by the service associated. As this attribute, it is possible to designate "time attribute" and "space attribute" applicable to descriptions of all the Web content files, and "task-inherent attribute" inherent to the associated task.

The time attribute is used for designating how long a service is valid, for a task as a target of association. A standard encoding method such as W3CDTF (World Wide Web Consortium Date Time Format) is used for the description of the time attribute. As described above, dates of a start and end of a service can be designated as the time attribute. For example, when the registrant designates [2003-07-31] as a value of a start date and [2003-08-31] as a value of an end date, it is indicated that a valid period of the service for the task associated is from July 31, 2003 to August 20, 2003.

Likewise, the space attribute is used for designating where a service is valid, for a task as a target of association. IDs used in a thesaurus such as GTN (Getty of Thesaurus geographics Name) can be used for the description of the space attribute. For example, in the GTN, "Yokohama" is specified by ID of [7004836]. This permits the registrant to designate "Yokohama" as an effective area of the service for the task associated.

The task-inherent attribute is used for providing a task as a target of association with information inherent to the task. The information inherent to the task is used for referring to values that can be designated by reference to a structure of concept definitions associated with a task model.

For example, let us suppose that "movie" as a class associated with a root task is associated with two values of "title" and "theater" and "theater" is further associated with each of values of "name" and "business hours." In this case, the Web content registrant is allowed to register any one of these values or all values for a task as a target of association. Therefore, in a case where a task is associated with a task model of "decide a theater → view a showing schedule" with a root task of "view a movie," when a user receives a service to provide a showing schedule associated with only a specific movie title, the user can designate the attribute about "title." When the user receives a service to provide only information about a specific theater, the user can enter a name of the theater as "name" of "theater."

On the occasion of designating each of values, a pair of a class ID and a value included in a concept definition is described. The Web content file thus described is transmitted from PC 170 to the problem-solving support server 110. The Web content registration unit 1113 of the problem-solving support server 110 analyzes the received Web content file and stores it in the Web content database 130.

### (Problem-solving Support Process)

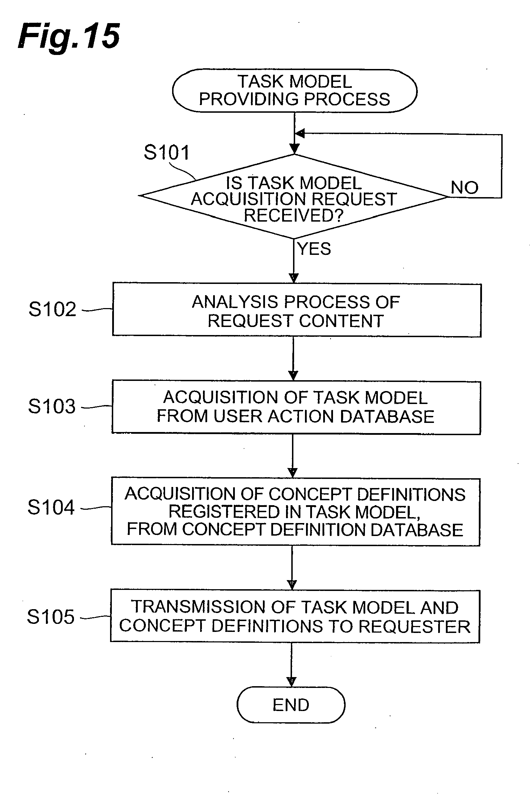

The problem-solving support process executed as the second phase will be described below with reference to Figs. 15 to 18.

First, the user of the mobile communication terminal 150 presents a problem to be solved by the problem-solving support server 110, thereby acquiring a task model (user action) selectable for solving the problem. The task model as a target of the acquisition request can be designated in a natural language, or by a method of selecting one from a list of task models preliminarily prepared by the problem-solving support server 110.

Fig. 15 is a flowchart for explaining a task model providing process executed by the problem-solving support server 110. In the first step S101, the problem-solving support server 110 is in a state in which the user action acquisition request receiver 1101 awaits a task model acquisition request transmitted from the mobile communication terminal or PC. The problem-solving support server 110, receiving an acquisition request for a task model, lets the user action searcher 1102 analyze the request content (S102) and acquires a task model matching the request, from the user action database 120 (S103). Then the server acquires concept definitions registered in the task model, from the concept definition database (S104) and thereafter lets the user action transmitter 1103 transmit this task model to the mobile communication terminal 150 (S105).

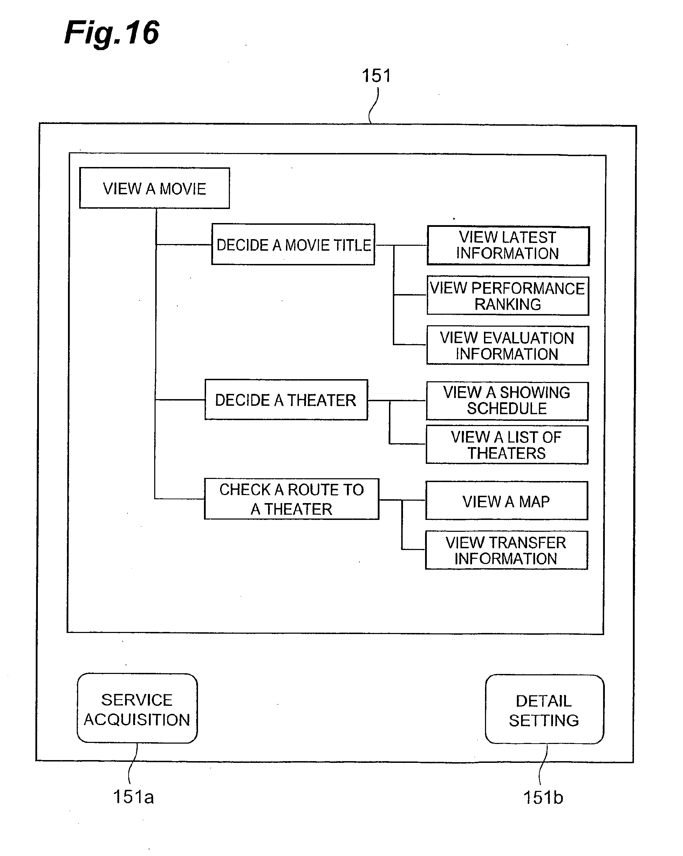

The display of the task model (user action) in the mobile communication terminal 150 is implemented using a well-known conventionally-used browser for Internet browsing or the like. Fig. 16 shows an example of the task model displayed at this time on a display unit 151 of the mobile communication terminal 150. The user of the mobile communication terminal 150 selects a task corresponding to a service that the user desires to acquire, out of tasks located at ends of the task model, e.g., "view latest information," "view performance ranking," "view evaluation information," "view showing schedule," and so on.

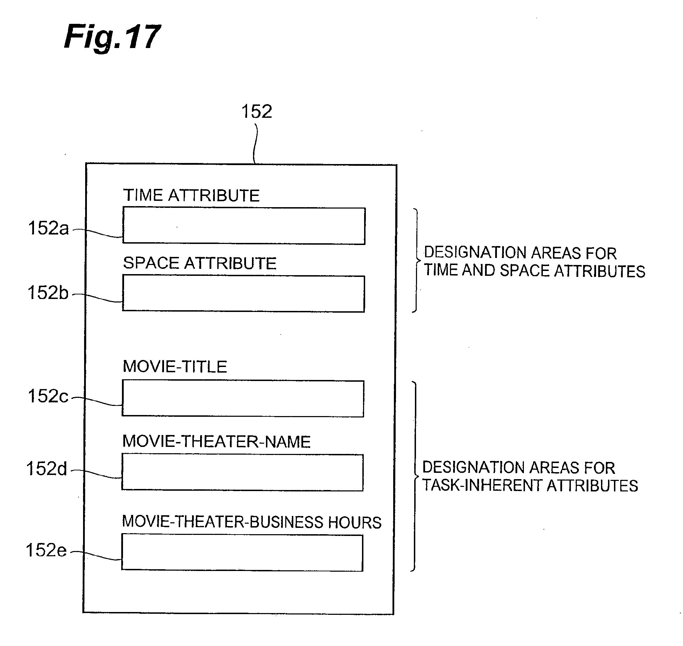

The user pushes a service acquisition button 151a to select a task to be finally executed, with reference to the displayed task model. At this time, the user may push a detail setting button 151 b to display a detail setting screen. Fig. 17 shows an example of the displayed detail setting screen. This detail setting screen 152 is used for filtering specific services, based on conditions designated by the user, from a large number of services associated with the acquired task model.

Specifically, the user first uses the Internet connection function of the mobile communication terminal 150 to connect to the problem-solving support server 110, and enters a problem to be solved. In the present embodiment, we assume a case where the user enters "movie" or a case where the user selects a task corresponding to "view a movie" from a list. When the user action acquisition request receiver 1101 of the problem-solving support server 110 receives the information entered by the user, the user action searcher 1102 searches the user action database 120. When the user action database 120 has the configuration shown in Fig. 11, the user action searcher 1102 acquires all tasks including "view a movie" as a root element of the tasks and associated therewith.

Next, the problem-solving support server 110 lets the concept definition searcher 1109 search the concept definition database 140 to acquire the concept definitions associated with the acquired task model. The concept definitions associated with the task model are determined by reference to the class IDs defined in the user action database 120. The user action transmitter 1103 of the problem-solving support server 110 converts the acquired task model and the concept definitions associated therewith, into a displayable format such as the HTML (Hypertext Markup Language) and then transmits the resulting data to the mobile communication terminal 150.

The user of the mobile communication terminal 150 manipulates anchors or the like on the display screen of the task model to select a task as a target of execution. During an operation for the task model, the user can push the detail setting button 151 b displayed on the display unit 151 (cf. Fig. 16) to display the aforementioned detail setting screen 152 (cf. Fig. 17). The detail setting screen is dynamically generated by the problem-solving support server 110, based on the concept definitions stored in association with the acquired task model in the concept definition database 140.

As shown in Fig. 17, the detail setting screen 152 is provided with designation areas for task-inherent attributes, in addition to designation area 152a for time attribute and designation area 152b for space attribute, and on this setting screen the user is allowed to enter detailed information corresponding to the acquired task model. The designation areas for task-inherent attributes provided on the screen are regions 152c, 152d, and 152e for permitting the user to individually enter the detailed information such as a title of a movie, a name of a theater, and a business hour of a theater.

It is, however, noted that the input by the user on the detail setting screen is optional and that, even in the case where the user enters the information, the user is allowed to enter only a necessary item. For example, in the case of the detail setting of the task model with the root of "view a movie," a user who already knows a title of a movie to watch, can enter the title only in the item of "title of movie"; a user who does not decide a movie to watch but already decides a theater, can enter the theater name only in the item of "name of the theater." The input values are transmitted along with the task ID and the class IDs corresponding to the input values to the problem-solving support server 110 when the user pushes the service acquisition button 151 a.

The user of the mobile communication terminal 150 is also allowed to display the detail setting screen and to enter information already decided, during acquisition of the task model or during execution of the task model. Namely, a user who first decided nothing about a title of a movie and a theater successively executes tasks and services associated with the task of "decide a title," and comes to decide a title, and at that point the user is allowed to enter the value (decided title) in the item of the movie title on the detail setting screen.

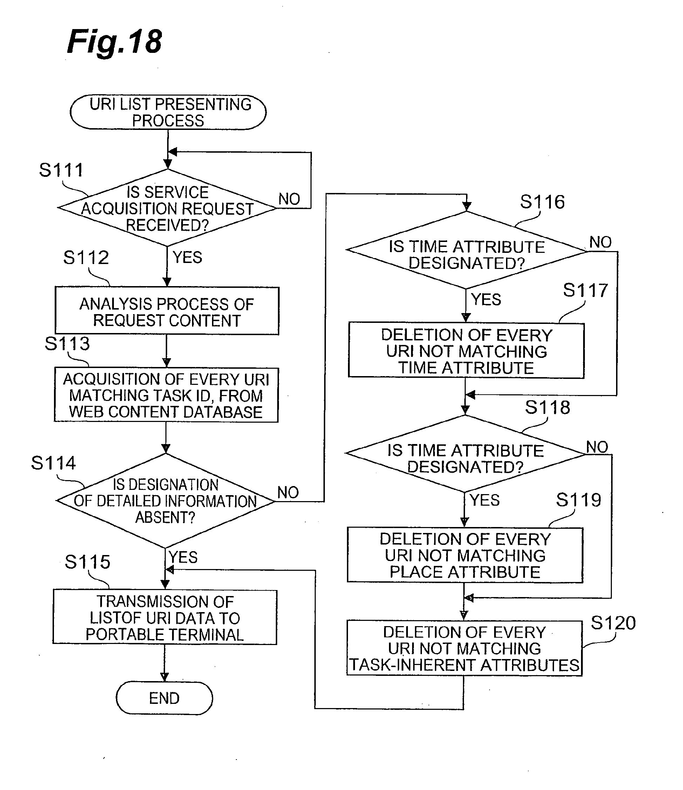

Referring back to Fig. 16, when the user of the mobile communication terminal 150 selects a task and pushes the service acquisition button 151a, the ID of the selected task and class IDs corresponding to the input attributes are transmitted to the problem-solving support server 110. With this as a trigger, the server starts to execute a URI list presenting process shown in the flowchart of Fig. 18. When in the problem-solving support server 110 the service acquisition request receiver 1104 receives the service acquisition request from the mobile communication terminal 150 (S111), the service acquisition request analyzer 1105 analyzes the request content and extracts the task ID and the class IDs of the attribute information (S 112).

In S113, the problem-solving support server 110 lets the service searcher 1111 acquire all relevant URIs from the Web content database 130, based on the task ID extracted in S112. If the detailed information about the task ID is present (S114; NO), the problem-solving support server 110 lets the service attribute extractor 1112 analyze the URIs acquired in S 113 to extract the attribute information of the services requested.

When the service acquisition request contains a time attribute value (S116; YES), the problem-solving support server 110 lets the service attribute matching unit 1106 collate the time attribute value in the request with the time attribute values set for the services extracted in S 113 from the Web content database 130, and delete URIs not matching the time attribute value (S117). Similarly, in the case of the space attribute value, when the service acquisition request contains a space attribute value (S118; YES), the problem-solving support server 110 collates the space attribute value in the request with the space attribute values set for the services extracted in S113 from the Web content database 130 and deletes URIs not matching the space attribute value (S119). Furthermore, the service attribute matching unit 1106 deletes URIs not matching the task-inherent attributes (S120). The above processing results in selecting services to be presented for the user of the mobile communication terminal 150.

When no detail information is set for the task ID extracted in S 112 (S 114; YES) or after completion of the process of S120, the flow moves to S 115. Namely, the problem-solving support server 110 lets the service list transmitter 1107 convert the list of service URIs selected finally, into a browser-displayable format such as the HTML and transmits the resulting data to the mobile communication terminal 150.

The problem-solving support system 101 does not have to be limited to the above-described mode, but can be modified in various ways, without departing from the spirit thereof.

For example, the three types of databases constituting the problem-solving support system 101 (user action database 120, Web content database 130, and concept definition database 140) are constructed as separate bodies from the problem-solving support server 110 also being a component thereof. However, one or more DBs out of these DBs may be formed integrally with the problem-solving support server 110. The principal functions of the problem-solving support server 110 (e.g., the Web content file registration function and the problem-solving support function) can also be distributed over the server devices constructed as separate bodies. This enhances transparency of locations in the system.

### [Industrial Applicability]

According to the present invention, the classification information is specified from the searching information included in the search request and this classification information is used to search the plurality of search target databases. Since the classification information is independent of the formats of search targets, plural types of searches can be performed using it. Namely, the present invention eliminates the need for individually carrying out each of the searches and permits plural types of searches to be carried out readily.

## Claims

1. A search server comprising:
a plurality of search target databases each storing search target information and classification information indicating a classification according to the search target information in correspondence to each other;
a classification information database storing searching information and the classification information in correspondence to each other;
search request receiving means for receiving a search request containing searching information, from a terminal;
classification information specifying means for specifying classification information associated with the search request, with reference to the information stored in the classification information database, based on the searching information contained in the search request received by the search request receiving means;
information acquiring means for acquiring the search target information corresponding to the classification information specified by the classification information specifying means, from the search target databases; and
search result information generating means for generating search result information to the search request, based on the search target information acquired by the information acquiring means.

2. The search server according to claim 1,
wherein location information is further stored in correspondence to the search target information stored in at least one of the search target databases,
wherein the search request receiving means further receives location information from the terminal associated with the search request, and
wherein the information acquiring means acquires the search target information corresponding to the classification information specified by the classification specifying means and the location information acquired by the search request receiving means.

3. The search server according to claim 2, further comprising a location information database hierarchically storing the location information,
wherein the information acquiring means acquires the search target information corresponding to the location information with reference to the location information database.

4. The search server according to any one of claims 1 to 3,
wherein the classification associated with the classification information is achieved based on a user action request.
